# EUROPÄISCHE PATENTANMELDUNG

(11) **EP 3 165 353 A1**
(43) Veröffentlichungstag der Anmeldung: **10.05.2017**
(21) Anmeldenummer: 16195672.7
(22) Anmeldetag: 26.10.2016
(51) Int. Cl.: B30B 9/32, B30B 11/26

(54) **VORRICHTUNG ZUR HERSTELLUNG VON PRESSLINGEN**

(30) Priorität: 04.11.2015 DE 102015221655
(71) Anmelder: DMG MORI AKTIENGESELLSCHAFT, 33689 Bielefeld (DE)
(72) Erfinder: SEITZ, Reinhold, 87659 Hopferau (DE)
(74) Vertreter: MERH-IP Matias Erny Reichl Hoffmann Patentanwälte PartG mbB

(57) **Zusammenfassung**

Die vorliegende Erfindung betrifft eine Vorrichtung zur Herstellung von Presslingen aus Pressgut mit einem Beschickungstrichter 2 zur Aufnahme von Pressgut, der im Bereich einer Zufuhrschnecke 1 angeordnet ist, einer durch die Zufuhrschnecke 1 beschickbaren Vorpresskammer 31, einer verschließbaren Hauptpresskammer 4 mit einem zur Verdichtung des Inhalts der Hauptpresskammer verfahrbaren Hauptpressstempel 41 und einer Auswurfeinrichtung 6 mit einem Verschlussschieber 61, und einer Schneidvorrichtung 3 zum Schneiden des Pressguts während oder nach dem Eintritt in die Vorpresskammer 31, wobei die Vorrichtung dazu eingerichtet ist das über die Zufuhrschnecke 1 der Vorpresskammer 31 zugeführte Pressgut zuzuschneiden, so dass geschnittenes Pressgut in der Vorpresskammer 31 und/oder Hauptpresskammer 4 zur Verdichtung bereitgestellt wird.

## Beschreibung

Die vorliegende Erfindung betrifft eine Vorrichtung zur Herstellung von Presslingen (Briketts) aus Pressgut. Über einen Beschickungstrichter wird das Pressgut dem System zugeführt, in einer Presskammer verdichtet, und zu einem Pressling verpresst. Danach wird dieser Pressling ausgegeben. Als Pressgut werden beispielsweise Metall- oder Kunststoffspäne verwendet.

### HINTERGRUND DER ERFINDUNG

Eine derartige Vorrichtung ist beispielsweise aus der DE 3038839 A1 bekannt. Eine Brikettpresse zum Brikettieren von Spanfasern oder von blattförmigem Feingut zu formbeständigen Briketts umfasst dabei einen hin- und herbewegbaren Presskolben und eine Aufnahmekammer, der das Pressgut durch eine Zuführvorrichtung aus einem Vorratsraum zugeführt wird. Im Antrieb des Presskolbens und der Riegelvorrichtung sind unmittelbar miteinander verbundene Flüssigkeitsmotoren vorgesehen, die an die gleiche Druckquelle angeschlossen sind.

Eine Aufgabe der vorliegenden Erfindung ist es, eine gattungsgemäße Vorrichtung zur Herstellung von Presslingen so auszubilden, so dass eine einfache, kostengünstige und gewichtsparende Vorrichtung mit verbesserter Verdichtung des Pressgutes erreicht werden kann. Diese Aufgabe wird durch die Merkmale des unabhängigen Patentanspruchs gelöst. Die abhängigen Patentansprüche betreffen vorteilhafte Ausführungsformen der Erfindung.

Die erfindungsgemäße Vorrichtung zur Herstellung von Presslingen aus Pressgut umfasst eine Beschickungseinrichtung zur Aufnahme von Pressgut, der bevorzugt im Bereich einer Zufuhrschnecke angeordnet ist. Zudem umfasst die Vorrichtung eine Vorpresskammer, die über die Zufuhrschnecke beschickt wird. In einer verschließbaren Hauptpresskammer kann ein verfahrbarer Hauptpressstempel zur Verdichtung des Inhalts der Hauptpresskammer vorgesehen sein. Die Vorrichtung kann zudem eine Auswurfeinrichtung mit für Presslinge und eine Schneidvorrichtung zum Schneiden des Pressguts aufweisen. Die Schneidvorrichtung kann das Pressgut dabei während oder nach dem Eintritt in die Vorpresskammer schneiden. Die Vorrichtung ist somit dazu eingerichtet, das über die Zufuhrschnecke der Vorpresskammer zugeführte Pressgut mittels der Schneidvorrichtung zuzuschneiden, so dass geschnittenes Pressgut in der Presskammer und/oder Hauptpresskammer zur Verdichtung bereitgestellt werden kann. Insbesondere kann das geschnittene Pressgut durch den Hauptpressstempel verdichtet werden.

Somit wird es ermöglicht, das Pressgut vor dem Pressvorgang zuzuschneiden und aus dem zugeschnittenen Pressgut den Pressling zu erhalten und somit den Pressvorgang zu optimieren. Insbesondere werden besonders formbeständige Briketts (Presslinge) mit einer größtmöglichen Verdichtung und zugleich großer Gleichmäßigkeit der Brikettgröße erreicht. Das Pressgut kann dabei metallisch sein oder aus Kunststoff bestehen.

Die Vorpresskammer kann über einen Zufuhrabschnitt von der Zufuhrschnecke aus beschickbar sein, wobei die Schneidvorrichtung im Bereich des Zufuhrabschnitts angeordnet sein kann. Durch diese Anordnung der Schneidvorrichtung wird ermöglicht, das von der Zufuhrschnecke zugeführt Pressgut unmittelbar vor oder beim Eintritt in die Vorpresskammer zu schneiden und somit eine besonders effiziente Pressgutzufuhr und eine verbesserte Verdichtung zu erreichen. Besonders vorteilhaft ist die Schneidvorrichtung derart ausgebildet, dass ein Scherschneiden ermöglicht wird durch Bereitstellung einer Schneidplatte und eines Stempels, jeweils mit Schnittflächen. Die Schnittflächen sind bevorzugt dabei derart angeordnet, dass diese einander gegenüberliegen und einen Schneidspalt ausbilden.

Die Vorrichtung kann derart ausgestaltet sein, dass die Schneidvorrichtung einen Schneidpresskolben umfasst, der im Endbereich einen Schneidabschnitt und einen Pressabschnitt aufweisen kann, so dass ein gemeinsames Schneiden und Pressen von Pressgut durch die Bewegung des Schneidpresskolbens im Bereich der Vorpresskammer bewirkbar ist.

Diese besonders vorteilhafte Anordnung ermöglicht es, den Schneidvorgang und den Vorpressvorgang, welcher bevorzugt in der Vorpresskammer durchgeführt wird, zu kombinieren und somit eine sehr effiziente Systemausgestaltung zu erreichen. Da der Endbereich sowohl einen Schneidabschnitt, als auch einen Pressabschnitt aufweist, kann mit ein- und demselben Bereich des Schneidpresskolbens der Schneidevorgang und der Pressvorgang durchgeführt werden. Das Vorliegen eines Schneidabschnitts am Schneidpresskolben gewährleistet zudem ein Zerschneiden des zugeführten Pressguts. Der Schneidabschnitt kann dazu bevorzugt eine Schneide aufweisen. Durch Einsatz zumindest einer Schneide ist es möglich, die Formfehler an geschnittenen Teilen (insbesondere des Pressguts) im Vergleich zum bloßen Brechen oder Reißen zu reduzieren, und gleichzeitig die benötigte Kraft zu optimieren (reduzieren). In einer bevorzugten Ausführungsform ist der Spanwinkel der Schneide positiv d.h. kleiner als 90° zur Schneiderichtung oder Null (d.h. 90° zur Schneiderichtung).

Die Hauptpresskammer kann vom Schneidpresskolben verschließbar sein. Durch das Verschließen der Hauptpresskammer durch den Schneidpresskolben ergibt sich die Möglichkeit, dass in nur einem Vorgang das Pressgut in der Vorpresskammer vorgepresst wird und gleichzeitig bei Erreichen beispielsweise eines unteren Totpunktes des Schneidpresskolbens ein Verschließen der Hauptpresskammer erreicht wird, so dass im unmittelbaren Anschluss der Hauptpressvorgang in der Hauptpresskammer durchgeführt werden kann. Die Arbeitsweise der Vorrichtung wird somit weiter optimiert.

Der Schneidpresskolben kann im Schneidabschnitt eine Schneide zum Schneiden von Pressgut aufweisen. Durch diese besonders vorteilhafte Ausgestaltung ist es möglich über den Schneidpresskolben das zugeführte Pressgut in effizienter und sicherer Weise zuzuschneiden und unter anderem die Qualität der Briketts dadurch zu erhöhen. Durch entsprechende Wahl der Ansteuerung des Schneidpresskolbens kann dieser einfach oder mehrfach das zugeführte Pressgut schneiden, so dass bei mehrfachem Schnitt des Pressguts für einen Vorpressvorgang die Qualität der Briketts weiter erhöht werden kann und somit auch die Dichte und Kompaktheit verbessert wird. Durch entsprechende Ausgestaltung der Schneide ist es zudem möglich, verschiedenste Materialien als Pressgut einzusetzen, insbesondere Metall- oder Kunststoffspäne. Bevorzugt ist die Schneide gehärtet.

Der Schneidpresskolben kann eine Stirnfläche mit konkaver Krümmung aufweisen. Durch diese Wahl der Krümmung der Stirnfläche ist es möglich, den Schneidvorgang weiter zu verbessern. Insbesondere kann über eine konkave Krümmung der entstehende Span des Schneidvorgangs vorteilhaft abgelenkt werden, so dass beispielsweise ein Verklemmen an den Seitenflächen reduziert wird. Ein solches Verklemmen tritt beispielsweise auf, wenn der Span nicht vom Schnittbereich in unmittelbarer Nähe der Schneide nach dem Schneidvorgang oder während des Schneidvorgangs abgeführt wird und sich somit im direkten Bereich der Schneide ein Materialstau ergibt, der zu Verklemmungen führt. Die konkave Krümmung der Stirnfläche und somit die konkave Fläche des Schneidpresskolbens liegt bevorzugt zwischen den Randbereichen, in denen insbesondere die Schneide/Schneiden vorliegen, vor.

Die Hauptpresskammer kann zylinderförmig ausgebildet sein und ein konkaver Teil der Stirnfläche des Schneidpresskolbens kann zum Verschließen der Hauptpresskammer einen Teil der zylindrischen Mantelfläche der Hauptpresskammer bilden. Mit anderen Worten kann der Schneidpresskolben in das Pressrohr einfahren und dieses verschließen. Durch diese Ausgestaltung wird es möglich, die Endfläche des Schneidpresskolbens multifunktional auszubilden. Somit kann einerseits der für den Schneidvorgang benötigte Spänetransport durch die konkave Krümmung der Fläche gewährleistet werden, als auch ein sicherer Verschluss der Hauptpresskammer, welche eine zylindrische Mantelfläche aufweist. Somit stellt die konkave Fläche im Endbereich des Schneidpresskolbens einen Teil der Mantelfläche der Hauptpresskammer dar. Dadurch wird unter anderem auch die Verdichtung in der Vorpresskammer erhöht, die die Güte des Presslings verbessert.

Die zylinderförmige Mantelfläche der Hauptpresskammer kann eine kreisförmige oder elliptische Grundfläche aufweisen. Eine solche zylinderförmige Mantelfläche mit kreisförmiger oder elliptischer Grundfläche ermöglicht die einfache Herstellung von zylinderförmigen Presslingen bzw. Briketts, welche insbesondere gegenüber Presslingen mit kantiger bzw. viereckiger Form, also auch Quaderform den Vorteil haben, dass im Mantelbereich keine länglichen Kanten vorliegen, in denen nur eine schlechte Verdichtung erreichbar ist. Durch eine kreisförmige Grundfläche ist es somit möglich, die Verdichtung des Pressguts zu erhöhen und die Güte des Presslings zu verbessern. Zudem wird dadurch auch der Auswurf erleichtert.

Die Hauptpresskammer kann als Hohlraum eines Rohrs ausgebildet sein. Somit kann ein Rohr die Hauptpresskammer umfassen, wobei in dieses Rohr in die Vorrichtung eingesetzt werden kann. Daher lässt sich bei der erfindungsgemäßen Vorrichtung die Hauptpresskammer auf einfache Weise austauschen, indem man einfach das Rohr austauscht. Zudem gibt es die Möglichkeit, dass durch entsprechende Wahl des inneren und äußeren Durchmessers des Rohrs der Durchmesser des herzustellenden Presslings variiert wird. Somit kann mit der Vorrichtung bei entsprechender Anpassung des Rohrs mit der damit verbundenen Hauptpresskammer und insbesondere des inneren Durchmessers des Rohrs eine Variation des Presslingdurchmessers erzielt werden.

Die Vorrichtung kann im Bereich der Hauptpresskammer eine Zwischenplatte aufweisen, die eine Abscheideöffnung zum Abscheiden von Flüssigkeit aus der Hauptpresskammer aufweisen kann. Zudem kann die Vorrichtung eine Wanne zur Aufnahme der Flüssigkeit aufweisen. Insbesondere bei Metallspänen finden sich häufig Ölrückstände und andere Flüssigkeitsrückstände auf den Spänen, so dass durch den Pressvorgang diese Flüssigkeiten aus den Spänen ausgepresst werden. Zur Verbesserung der Verdichtung des Briketts ist somit eine Abscheideöffnung zum Abscheiden von Flüssigkeiten vorgesehen, so dass diese aus der Hauptpresskammer austreten können und die Verdichtung verbessert werden kann.

Die Abscheideöffnung kann als ringförmiger Spalt ausgebildet sein, welcher an die Hauptpresskammer und bevorzugt auch an die Auswurfeinrichtung grenzt. Durch Bereitstellung eines ringförmigen Spalts als Abscheideöffnung ist es möglich, die ausgepresste Flüssigkeit gleichmäßig aufzunehmen und abzuführen. Ein solcher ringförmiger Spalt ist somit insbesondere im Bereich des Umfangs der Hauptpresskammer dem Umfang entlang verlaufend angeordnet. Bevorzugt hat der Spalt dabei eine dem Umfang entlang verlaufende Öffnungsbreite von 0,5 mm bis 2 mm.

Die Hauptpresskammer kann eine Abscheideöffnung zum Abscheiden der aus dem Pressgut ausgepressten Flüssigkeit aufweisen. Dadurch kann auf einfache Weise ohne zusätzliche Bauteile die Pressgüte erhöht werden.

Die Beschickungseinrichtung kann einen Beschickungstrichter umfassen wobei eine bevorzugt ausziehbar gestaltete Zusatzeinrichtung am Beschickungstrichter zur Erhöhung der Sicherheit vorgesehen werden kann.

Die Vorrichtung kann im Zufuhrabschnitt eine Schneideplatte mit einer Schneidekante aufweisen, wobei die Schneideplatte insbesondere als Schneidering ausgebildet sein kann. Somit kann zur Erhöhung der Schneidegüte einerseits der Schneidpresskolben mit einer Schneide und als dazu vorgesehenes Gegenstück eine Schneideplatte mit einer Schneide vorgesehen sein. Durch das Zusammenwirken dieser beiden einander zugeordneten Schneiden wird ein äußerst effizienter Schneidevorgang gewährleistet. Besonders vorteilhaft ist die Ausbildung der Schneideplatte als Schneidering. Der Schneidering kann dabei eine den Umfang (radial) entlang verlaufende Schneide aufweisen, so dass durch den Schneidering hindurch geführtes Pressgut äußerst effizient geschnitten werden kann.

Der Schneidpresskolben kann translatorisch bewegbar angeordnet sein, so dass durch die Bewegung des Schneidpresskolbens mit der Schneide relativ zur Schneideplatte ein Schneiden von Pressgut erreichbar ist. Somit wird das durch den Zufuhrabschnitt zugeführte Pressgut an der Schneide der Schneideplatte im Zusammenwirken mit der Schneide des Schneidbrettpresskolbens geschnitten.

Der Hauptpressstempel kann einen Hauptpresskolben aufweisen, welcher eine bombierte Stirnfläche aufweisen kann. Durch diese Ausgestaltung wird einerseits die strukturelle Stabilität des Hauptpresskolbens erhöht und andererseits kann die Verdichtung des Pressguts verbessert werden.

Die Vorrichtung kann eine Auswurfeinrichtung und einen Verschlussschieber aufweisen. Dabei kann die Auswurfeinrichtung ein Zwischenstück mit einer Öffnung aufweisen, wobei die Öffnung derart angeordnet sein kann, dass gepresstes Pressgut durch die Öffnung hindurch bewegt werden kann und wobei die Öffnung trichterförmig ausgestaltet sein kann.

Die Wanne kann zur Ableitung von Flüssigkeiten in einen Behälter, einen trichterförmig geneigten Boden aufweisen. Somit ist es möglich, die ausgepresste Flüssigkeit auf einfache Weise in einen Behälter aufzufangen, ohne dafür eine Pumpe zu benötigen.

Eine Werkzeugmaschine kann mit einer Vorrichtung wie soeben beschrieben ausgestattet sein. Dadurch kann die Effizienz der Werkzeugmaschine in besonderer Weise erhöht werden, da nach jedem Bearbeitungsvorgang der Werkzeugmaschine die angefallenen Späne direkt über den Pressvorgang der obengenannten Vorrichtung zu Briketts weiterverarbeitet werden. Zudem kann anfallende Flüssigkeit wie Öl, Schmierstoff oder Kühlflüssigkeit über die Vorrichtung zur Werkzeugmaschine zurückgeführt werden.

Die Vorrichtung zur Herstellung von Presslingen kann zudem als Plug and Play-Lösung in Form einer eigenständigen Einheit mit einer bevorzugten Stellgröße von nicht mehr als 1m² ausgebildet sein. Diese Vorrichtung kann somit auf einfache Weise an verschiedene Maschinen angeschlossen werden.

Vorteilhafte Ausgestaltungen und weitere Details der vorliegenden Erfindung werden im Folgenden an verschiedenen Ausführungsbeispielen mit Bezug auf schematische Figuren beschrieben. In den schematischen Zeichnungen wird die Erfindung näher erläutert.

### KURZBESCHREIBUNG DER FIGUREN

- **Figur 1**: zeigt den Schnitt H-H einer erfindungsgemäßen Ausführungsform der Vorrichtung zur Herstellung von Presslingen aus Pressgut;
- **Figur 2**: zeigt eine vergrößerte Ansicht des Schnitts H-H;
- **Figur 3**: zeigt den Schnitt J-J der erfindungsgemäßen Ausführungsform;
- **Figur 4a**: zeigt eine erste Ansicht des zentralen Aufnahmeteils;
- **Figur 4b**: zeigt einen Längsschnitt durch das zentrale Aufnahmeteil;
- **Figur 4c**: zeigt eine Seitenansicht des zentralen Aufnahmeteils;
- **Figur 4d**: zeigt den Schnitt B-B durch das zentrale Aufnahmeteil;
- **Figur 4e**: zeigt den Schnitt C-C durch das zentrale Aufnahmeteil;
- **Figur 4f**: zeigt den Schnitt D-D durch das zentrale Aufnahmeteil;
- **Figur 5a**: zeigt eine erste Ansicht des Schneidpresskolbens;
- **Figur 5b**: zeigt eine Schnittansicht des Schneidpresskolbens;
- **Figur 5c**: zeigt eine Seitenansicht des Schneidpresskolbens;
- **Figur 6a**: zeigt eine erste Ansicht des Pressrohrs;
- **Figur 6b**: zeigt eine Ansicht des Pressrohrs;
- **Figur 6c**: zeigt eine Seitenansicht des Pressrohrs;
- **Figur 7a**: zeigt eine erste Ansicht des Verschlussschiebers;
- **Figur 7b**: zeigt eine Seitenansicht des Verschlussschiebers;
- **Figur 7c**: zeigt eine Schnittansicht durch den Verschlussschieber;
- **Figur 7d**: zeigt eine Vorderansicht des Verschlussschiebers;
- **Figur 8a**: zeigt eine erste Ansicht des Schneidrings;
- **Figur 8b**: zeigt eine Vorderansicht des Schneidrings;
- **Figur 8c**: zeigt eine Schnittansicht des Schneidrings;
- **Figur 9a**: zeigt eine erste Ansicht des Hauptpresskolbens;
- **Figur 9b**: zeigt eine Vorderansicht des Hauptpresskolbens;
- **Figur 9c**: zeigt eine Schnittansicht des Hauptpresskolbens;
- **Figur 10a**: zeigt eine erste Ansicht der Zwischenplatte;
- **Figur 10b**: zeigt eine Vorderansicht der Zwischenplatte;
- **Figur 10c**: zeigt eine Rückansicht der Zwischenplatte;
- **Figur 10d**: zeigt eine Schnittansicht der Zwischenplatte;
- **Figur 11a**: zeigt eine erste Ansicht des Auswurfs;
- **Figur 11b**: zeigt eine zweite Ansicht des Auswurfs;
- **Figur 12a**: zeigt eine erste Ansicht des Gewindestifts;
- **Figur 12b**: zeigt eine zweite Ansicht des Gewindestifts;
- **Figur 13a**: zeigt eine erste Ansicht der Führung;
- **Figur 13b**: zeigt eine zweite Ansicht der Führung;
- **Figur 13c**: zeigt eine Schnittansicht der Führung;

### DETAILLIERTE BESCHREIBUNG DER FIGUREN UND AUSFÜHRUNGSFORMEN DER ERFINDUNG

Im Folgenden werden verschiedene Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Merkmale begrenzt, sondern umfasst weiterhin Modifikationen von Merkmalen der beschriebenen Beispiele und Kombinationen von Merkmalen verschiedener Beispiele im Rahmen des Umfangs der unabhängigen Ansprüche.

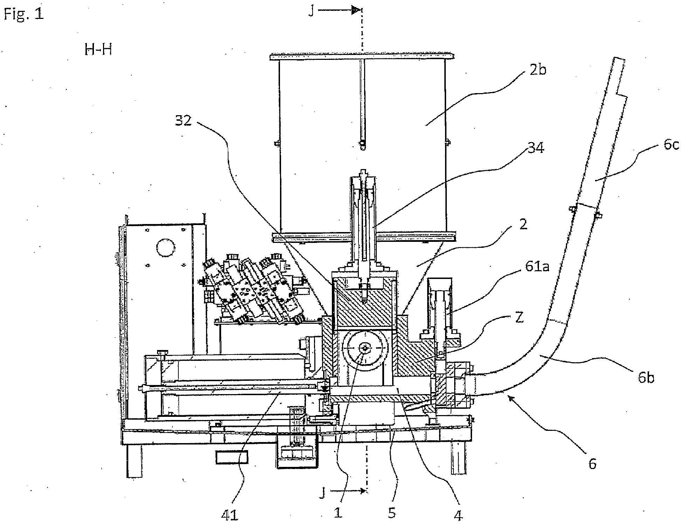

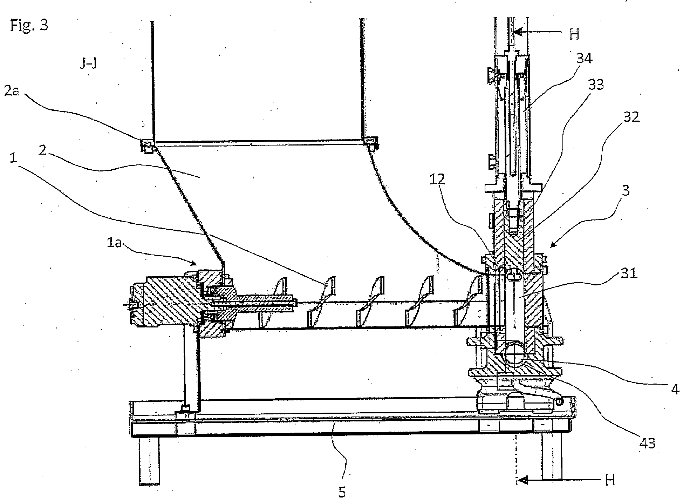

Figur 1 zeigt eine Schnittdarstellung H-H der Vorrichtung zur Herstellung von Presslingen/Briketts (der Verlauf des Schnitts H-H ergibt sich aus Figur 3. Die dargestellte Vorrichtung wird bevorzugt für die Verarbeitung von Pressgut wie metallische Späne oder Späne aus Kunststoff verwendet. Besonders vorteilhaft ist die dargestellte Vorrichtung (Brikettpresse) als Teil einer Werkzeugmaschine ausgebildet. Die durch die Arbeitsprozesse der Werkzeugmaschine anfallenden Späne können somit in derselben Werkzeugmaschine hocheffizient zu Briketts weiterverarbeitet werden und gleichzeitig kann die anfallende Flüssigkeit wie Schmierflüssigkeit oder Kühlflüssigkeit direkt in die Werkzeugmaschine zurückgeführt werden. Die Vorrichtung kann vorteilhafterweise derart ausgestaltet werden, dass sie durch Vorsehung beispielsweise von Rädern an den Standfüßen und Anschlussstücken für Werkzeugmaschinen mit verschiedenen Werkzeugmaschinen anschließbar ist und mobil ausgeführt ist. Dies hat den besonderen Vorteil, dass die Vorrichtung bei verschiedenen Werkzeugmaschinen bzw. Maschinen eingesetzt werden kann und somit abhängig von der gerade in Betrieb stehenden Maschine an diese angeschlossen werden kann. Somit wird durch eine solche mobile und flexibel anschließbare Vorrichtung zur Herstellung von Briketts ein äußerst flexibel und effizient einsetzbares System bereitgestellt.

In der Schnittansicht in Figur 1 werden die zugeführten Späne (bzw. allgemein Pressgut) über den Adapter 2b in den Beschickungstrichter 2 eingefüllt. Der Beschickungstrichter 2 umfasst in einem Endabschnitt eine Zufuhrschnecke 1 über welche das Pressgut für die weiteren Arbeitsschritte weiterbefördert wird. Der Beschickungstrichter 2 ist über eine Verschraubung 2a mit dem Adapter 2b verbunden. Der Beschickungstrichter weist geneigte Mantelflächen auf, über welche das zugeführte Pressgut zur Schnecke und/oder zum Zufuhrbereich im Bereich der Vorpresskammer 31 abgelenkt wird. Die Zufuhrschnecke 1 (Förderschnecke) ist einseitig an der Lagerung 1a gelagert und über den Antrieb 1b angetrieben. Abhängig vom zugeführten Pressgut und weiteren Prozessparametern (insbesondere auch der Größe des Schneidspalts) kann die Drehzahl der Schnecke angepasst werden. Die Zufuhrschnecke 1 umfasst eine Schneckenwelle und ein Schneckengewinde. In einer Weiterbildung der vorliegenden Erfindung ist das Schneckengewinde an den Endflächen der Flanken spitz zulaufend ausgestaltet, so dass ein Schneiden des zugeführten Pressguts bereits durch die Drehung der Zufuhrschnecke erreicht werden kann mit einem bevorzugt einstellbaren Schneidspalt dazwischen.

Das zugeführte Pressgut, welches über den Beschickungstrichter auf die Zufuhrschnecke 1 trifft, wird über diese Zufuhrschnecke bevorzugt kontinuierlich über einen Zuführabschnitt in die Vorpresskammer 31 befördert. In diesem Zuführabschnitt kann ein Schneidering 12 (Schneideplatte) angeordnet sein. Der Schneidering 12 weist eine Öffnung auf, durch welche das Pressgut befördert wird. An der dem Schneidpresskolben 32 zugewandten Seite der Öffnung des Schneiderings 12 ist eine bevorzugt voll umfänglich verlaufende Schneide angeordnet. Auch der Schneidpresskolben 32 weist bevorzugt eine Schneide auf, welche direkt an die Schneide des Schneiderings grenzen kann. Wird somit Pressgut in die Vorpresskammer 31 bzw. Hauptpresskammer 4 über den Zufuhrabschnitt durch die Zufuhrschnecke 1 befördert, so kann dieses durch Bewegung des Schneidpresskolbens mit der Schneide des Schneidrings 12 zugeschnitten werden. Dabei ist es möglich bei der Herstellung eines Briketts den Schneidpresskolben 32 mehrfach zu bewegen und somit das Pressgut für das eine Brikett mehrfach zu schneiden bzw. ist es möglich, den Schneidpresskolben 32 auch nur ein einziges Mal zu bewegen um das zugeführte Pressgut, welches noch nicht vollständig in die Vorpresskammer 31 eingetreten ist, zuzuschneiden. Somit wird das zugeführte Pressgut über die Schneidevorrichtung 3 zugeschnitten.

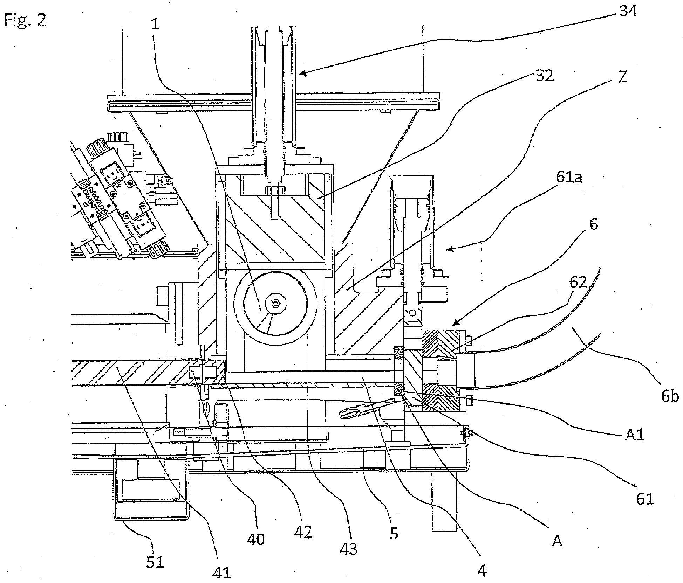

Die Schneidevorrichtung 3 umfasst einen Schneidpresskolben 32, welcher in der Kolbenführung 33 beweglich geführt ist. Die Kolbenführung 33 grenzt an einer Unterseite im Endabschnitt an die Hauptpresskammer 4 und bildet zwischen der Hauptpresskammer und dem Zufuhrabschnitt die Vorpresskammer 31. Die Vorpresskammer 31 dient einem Vorverdichten des zugeführten Pressguts bevor dieses in der Hauptpresskammer im Hauptpressvorgang zu einem Pressling (Brikett) verdichtet wird. Der Schneidpresskolben 32 wird über eine Vorpresshydraulik 34 aktuiert. Die Vorpresshydraulik 34 kann jedoch auch durch einen anderen Antrieb ersetzt werden, welcher es ermöglicht, den Schneidpresskolben 32 mit erhöhter Frequenz zu bewegen und somit mehrere Schneidvorgänge in kurzer Zeit durchführen zu können. Insbesondere kann eine solche Hin- und Herbewegung des Schneidpresskolbens 22 über ein Getriebe und einen Elektromotor erreicht werden. Der Schneidpresskolben 32 weist an seiner Stirnfläche eine konkav gekrümmte Fläche auf, welche einerseits zum Späneabtransport und andererseits zum Verschluss der Hauptpresskammer 4 dient. Diese Stirnfläche des Schneidpresskolbens 32 bildet somit einen Teil der Mantelfläche der zylinderförmigen Hauptpresskammer 4, so dass der Schneidpresskolben 32 in einer unteren Position (bevorzugt im unteren Totpunkt) die Hauptpresskammer 4 verschließt und im direkten Anschluss an das Verschließen der Hauptpresskammer 4 der Hauptpressvorgang durchgeführt werden kann. Die Hauptpresskammer 4 ist als Innenraum eines Pressrohrs 43 vorgesehen. Das beim Hauptpressvorgang ausgepresste Öl bzw. die ausgepressten Flüssigkeiten werden über eine Ableitung in eine Wanne 5 abgeleitet um weiter in einem Auffangbehälter gesammelt zu werden. Bei Anschluss der Vorrichtung an eine Werkzeugmaschine kann die aufgefangene Flüssigkeit in die Werkzeugmaschine zurückgeführt werden, so dass beispielsweise der Kühlemulsionsverbrauch reduziert werden kann. In Figur 1 ist zudem der Verlauf des Schnitts von H nach H eingezeichnet, welcher detailliert in Figur 2 dargestellt ist.

Die in Figur 2 dargestellte Schnittansicht H - H, zeigt eine vergrößerte Schnittansicht der Brikettpresse. Das Pressgut wird über die Zufuhrschnecke 1 in die Vorpresskammer eingefüllt, wobei der in der oberen Stellung (im oberen Totpunkt) dargestellte Schneidpresskolben 32 über die Vorpresshydraulik 34 eine translatorische Bewegung in Richtung der Hauptpresskammer 4 durchführt. Bei dieser Bewegung wird einerseits ein Schneiden des zugeführten Pressguts bewirkt und gleichzeitig auch ein Vorverdichten des zugeführten Pressguts in der Vorpresskammer 31. Für den Hauptpressvorgang wird das vorgepresste Pressgut über einen Hauptpressstempel von einer Hauptpresshydraulik 42 aktuiert und in der Hauptpresskammer in Richtung der Auswurfeinrichtung 6 verdichtet. Zur Aufnahme der Führung des Schneidpresskolbens als auch des Pressrohrs und zum Anschluss der Auswurfeinrichtung 6 ist ein zentrales Aufnahmeteil Z (Mittelstück) vorgesehen. Die im Hauptpressvorgang ausgepresste Flüssigkeit wird über eine Abscheideöffnung in die Wanne 5 weitergeleitet, welche eine geneigte Bodenfläche aufweist, so dass die ausgepresste Flüssigkeit sich in einem Behälter sammeln kann. Nach Erweichen der Endverdichtung wird der Pressling über eine Auswurfeinrichtung 6 ausgegeben. Dazu wird die Öffnungshydraulik 61a aktiviert, so dass der Presslingfreigegeben wird und über die Auswurfeinrichtung 6 entlang des Bogenstücks des Auswurfs 6b und des Tangentenstücks des Auswurfs 6c ausgegeben wird.

In Figur 3 ist der Schnitt J-J dargestellt. Der Verlauf des Schnitts J-J ergibt sich aus Figur 1. Der Schneidpresskolben 32 ist über eine Gewindebohrung mit dem Hydraulikpressstempel der Vorpresshydraulik 34 verbunden um dadurch die nötige Hin- und Herbewegung bzw. Auf- und Abbewegung durchführen zu können.

Im unteren Totpunkt verschließt der Schneidpresskolben 32 bevorzugt das Pressrohr 43. Das Pressrohr 43 weist somit einen seitlichen Ausschnitt auf, welcher durch den Schneidpresskolben 32 mit der konkaven Fläche verschlossen werden kann.

Im Bereich des ersten Endes des Pressrohrs 43 in Längsrichtung ist der Hauptpresskolben 42 eingefügt, welcher in Längsrichtung in Pressrohr 43 bewegt werden kann. Der Hauptpresskolben 42 ist über ein Verbindungselement 40 mit dem Hauptpressstempel 41 der Hauptpresshydraulik verbunden. Bei Betätigung des Hauptpresstempels 41 über die Regeleinrichtung wird der Hauptpresskolben translatorisch in Richtung der Auswurfeinrichtung 6 bzw. zurück bewegt.

Nachdem der Schneidpresskolben das geschnittene und vorgepresste Pressgut in die Hauptpresskammer gepresst hat um diese zu verschließen, wird durch entsprechende Ansteuerung des Hauptpressstempels über den Hauptpresskolben 42 das Pressgut zum Pressling verdichtet. Dabei bewegt sich der Hauptpresskolben 42 translatorisch in Richtung des Verschlussschiebers 61, welcher als Gegenstück zum Hauptpresskolben 42 die Presskräfte in Längsrichtung entlang dem Pressrohr 43 aufnimmt. Im Endbereich der Hauptpresskammer 4, angrenzend zum Verschlussschieber 61, ist eine Abscheideöffnung A1 in einer Zwischenplatte A vorgesehen. Über diese Abscheideöffnung A1, welche bevorzugt direkt an den Verschlussschieber 61 grenzt, ist es möglich, die in der Hauptpresskammer durch Verdichtung des Pressguts resultierende Flüssigkeit aus der Hauptpresskammer 4 abzuführen. Dadurch wird eine Erhöhung der Verdichtung des Pressguts ermöglicht und somit ein besonders kompakter Pressling erreicht. Die auspresste Flüssigkeit wird über einen Auslasskanal in die Wanne 5 geleitet, über welche diese in den Auffangbehälter 51 weiterfließen kann.

Nach Erreichen der Endform, bzw. des gewünschten Presszustands des Presslings wird der Verschlussschieber 61 über die Öffnungshydraulik 61a zum Freigeben des Auswurfskanals nach unten bewegt. Nach Freigabe der Auswurföffnung kann der Pressling über den Hauptpresskolben 42 weiter in den Auswurfkanal rausgepresst werden, wobei bei diesem Auswurfvorgang der Pressling eine Auswurfplatte 62 passiert. Im weiteren Verlauf wird der Pressling dann über das Bogenstück 6b weitergeleitet.

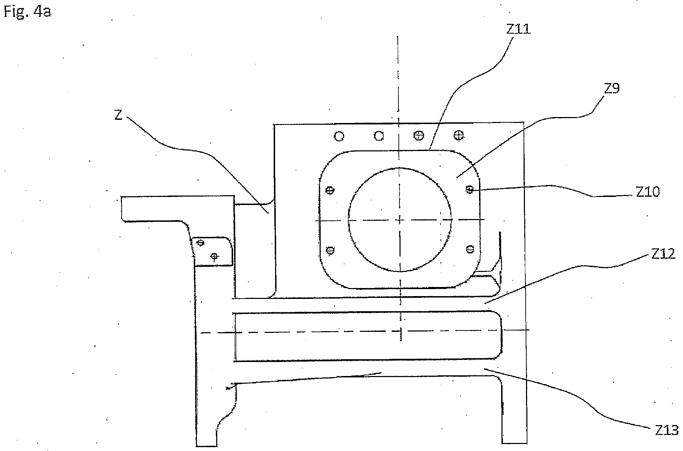

In Figur 4a ist eine erste Ansicht des zentralen Aufnahmeteils Z dargestellt. In der dargestellten Ansicht ist eine Anschlussfläche Z9 dargestellt, über welche die Schnecke bzw. der Beschickungstrichter 2 mit dem zentralen Aufnahmeteil Z verbunden werden können. Hierzu sind die Befestigungsbohrungen Z10 dargestellt, welche auf der Anschlussfläche Z9 gleichmäßig verteilt sind. Die Anschlusskontur Z11 entspricht einem Viereck mit abgerundeten Ecken. Zur Erhöhung der Steifigkeit des zentralen Aufnahmeteils Z ist eine obere Rippe Z12 und eine untere Rippe Z13 am zentralen Aufnahmeteil seitlich angeordnet. Eine solche Rippenanordnung findet sich auf beiden Seiten des Aufnahmeteils.

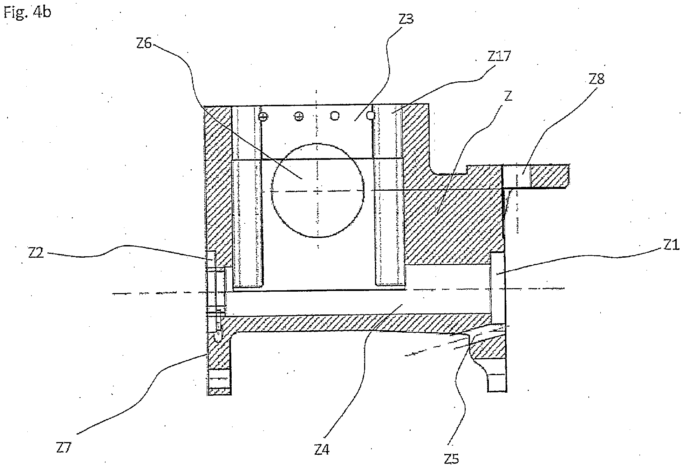

In der Figur 4b ist eine erste Schnittdarstellung des zentralen Aufnahmeteils Z dargestellt. Über die Führungsaufnahme Z17 wird die Führung des Schneidpresskolbens im zentralen Aufnahmeteil Z vorgesehen. Zudem weist das zentrale Aufnahmeteil Z eine Zufuhröffnung Z6 auf, über welche das Pressgut in die Vorpresskammer zugeführt wird. Die Fläche, an der die Zuführöffnung Z6 angeordnet ist, entspricht der Seitenfläche der Führungsaufnahme Z3. Im unteren Abschnitt des zentralen Aufnahmeteils Z ist die Pressrohraufnahme Z4 angeordnet. In die Pressrohraufnahme Z4 wird das jeweilige Pressrohr 43 eingefügt. Durch Variation des Innendurchmessers des Pressrohrs kann der Durchmesser der erzielten Presslinge eingestellt werden. Zudem kann durch entsprechende Wahl des Materials des Pressrohrs die Oberflächengüte des Presslings verbessert werden. Bevorzugt ist die Innenfläche des Pressrohrs gehärtet. Das zentrale Aufnahmeteil Z weist in einem Endbereich der Pressrohraufnahme Z4 einen Anschlag für das einzuführende Pressrohr auf. Über den Anschlag ist es möglich, das Pressrohr einseitig bis zum Erreichen des Anschlags einzuführen und somit auf einfache Weise die optimale Längsposition des Pressrohrs einzustellen. An diesen Anschlag ist zudem die Hauptkolbenpressaufnahme Z2 vorgesehen, über welche der Hauptpresskolben in das Pressrohr eingeführt ist. Das zentrale Aufnahmerohr Z ist über den Hauptpressvorrichtungsanschluss Z7 mit der Hauptpresshydraulik bzw. der Hauptpressvorrichtung verbunden. Am gegenüber liegenden Ende des Anschlags der Pressrohraufnahme Z4 ist eine Zwischenplattenaufnahme Z1 vorgesehen, in welche eine Zwischenplatte eingefügt werden kann und welche an einem Ableitungskanal Z5 zur Ableitung der ausgepressten Flüssigkeit grenzt.

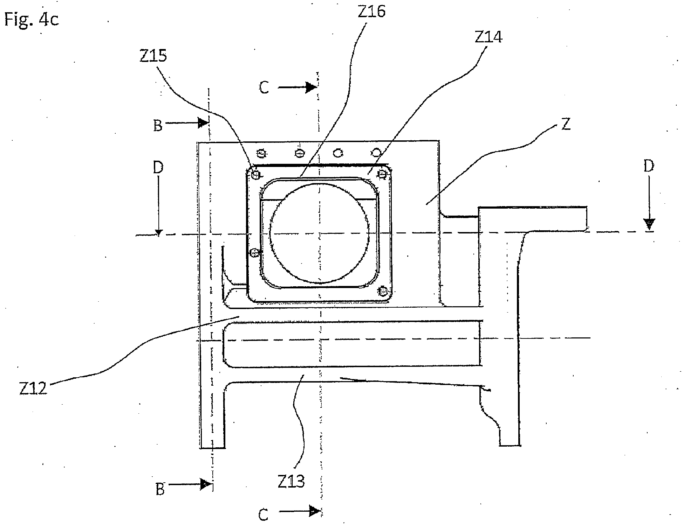

In Figur 4c ist eine Seitenansicht des zentralen Aufnahmeteils Z dargestellt. Auf dieser Seite des zentralen Aufnahmeteils Z ist bevorzugt ein Deckel, welcher für Inspektionen und Revisionen bzw. auch Reparaturen der Vorpresskammer und der daran angrenzenden Bereiche eingesetzt werden kann (bevorzugt auch zum Tausch der Schneidplatte). Dazu weißt das zentrale Aufnahmeteil Z eine Revisionsdeckelöffnung 16 (Inspektionsöffnung) und eine Aufnahmefläche Z14 für den Deckel auf. Der Deckel wird über die Deckelbefestigung Z15 mit dem zentralen Aufnahmeteil Z verbunden bzw. verschraubt. Auch auf dieser Seite des zentralen Aufnahmeteils Z ist die obere Rippe Z12 und die untere Rippe Z13 zur Erhöhung der Festigkeit des zentralen Aufnahmeteils Z vorgesehen. Zudem sind in Figur 4c die Verläufe der Schnitte B-B und C-C dargestellt.

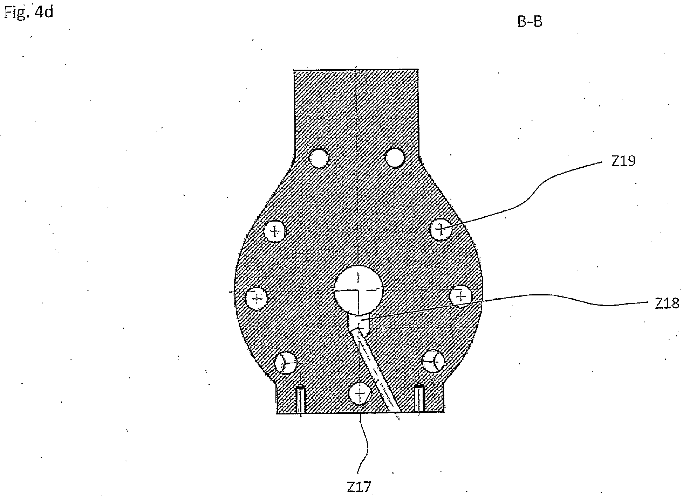

Figur 4d zeigt den Schnitt B-B durch das zentrale Aufnahmeteil Z. Die zentrale Öffnung in Figur 4d wird begrenzt von der Hauptkolbenpressaufnahme Z2, welche im unteren Bereich einen Sammeleinschnitt Z18 und welche in eine Ableitung Z17 mündet, aufweist. Über diese Öffnungen können überschüssige Flüssigkeiten aus den Bereich der Hauptkolbenpressaufnahme Z2 abgeführt werden. Zur Befestigung der Hauptpressvorrichtung und des dazu vorgesehenen Hauptpressvorrichtungsanschlussflansches Z7 sind die Flanschbohrungen Z19 vorgesehen, welche im jeweils gleichen Abstand zur Hauptpresskolbenaufnahme Z2 angeordnet sind und zueinander einen Winkel von mindestens 15° aufweisen.

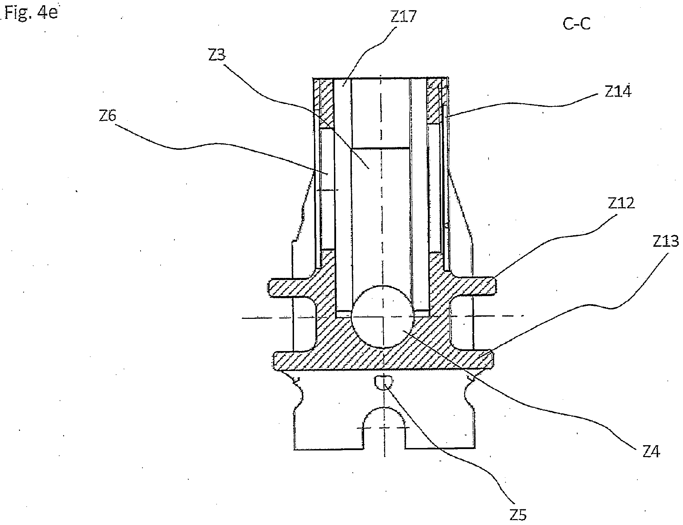

In Figur 4e ist eine weitere Schnittansicht des zentralen Aufnahmeteils Z dargestellt, Schnitt CC. Gegenüberliegend dazu vor Öffnung Z6, durch welche das zugeführte Pressgut in die Vorpresskammer eingeführt wird ist der Bereich des Revisionsdeckels angeordnet, welcher über die Aufnahmefläche Z14 am Mittelstück befestigt wird. Zur Aufnahme des Schneidpresskolbens ist im Mittelstück über die Führungsaufnahme Z17 und der Seitenfläche der Führungsaufnahme Z3 eine Führung vorgesehen. Im unteren Bereich der Führungsaufnahme ist die Pressrohraufnahme Z4 dargestellt. Zur Erhöhung der Steifigkeit des Mittelstücks ist beiderseitig jeweils eine obere Rippe Z12 und eine untere Rippe Z13 im Bereich der Pressrohraufnahme Z4 vorgesehen.

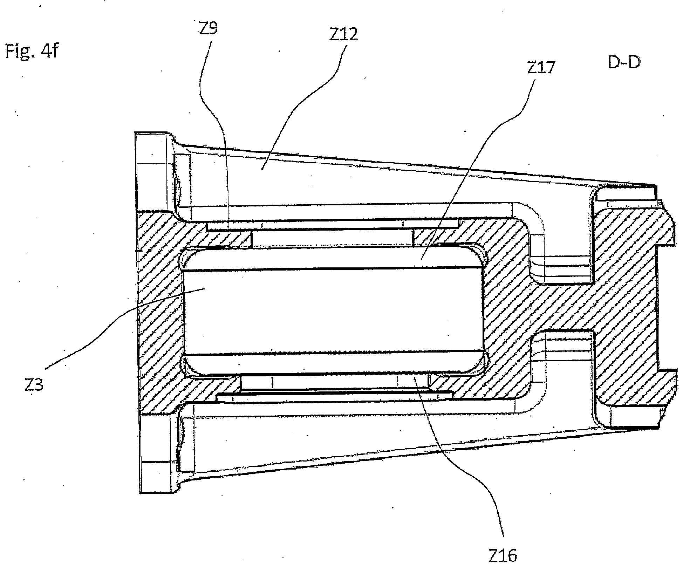

In Figur 4f ist die Schnittansicht von D-D des zentralen Mittelstücks dargestellt. Gut zu erkennen ist dabei der verjüngende Verlauf der oberen Rippe Z12, verjüngend vom Anschlussbereich der Hauptpressvorrichtung hin zum Anschlussbereich der Auswurfeinrichtung. In Figur 4f ist wiederum die Revisionsdeckelöffnung Z16 und die Anschlussfläche Z9 im Zufuhrbereich des Pressguts dargestellt. Zudem sind die Führungsaufnahme Z14 und die Seitenfläche der Führungsaufnahme Z3 dargestellt. Der Verlauf der Vorpresskammer bzw. die Grundfläche der Vorpresskammer ist in Figur 4f als Rechteck dargestellt. Über die kreisförmige Zuführöffnung wird somit das Pressgut von der Zufuhrschnecke 1 über den Zuführbereich durch die Führung hindurch durch eine kreisförmige Öffnung in die rechteckförmige Vorpresskammer bewegt.

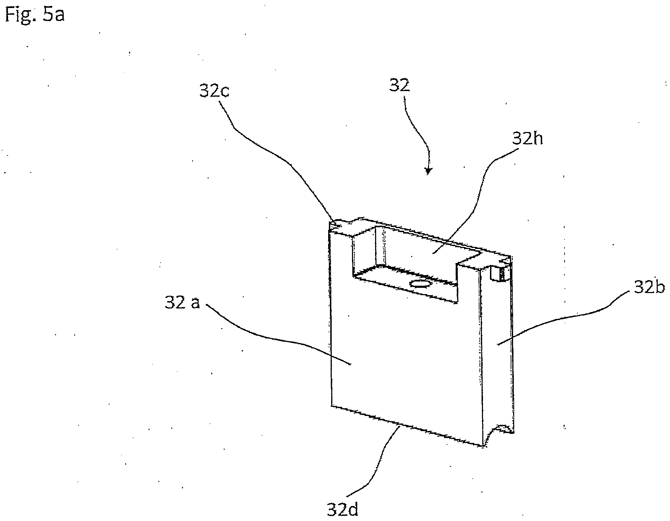

Der Schneidpresskolben 32 mit seinem an der Unterseite angeordneten Schneid- und Pressbereich ist in Figur 5a dargestellt. An der Arbeitsseite 32d des Schneidpresskolbens 32 ist der Schneidbereich und Pressbereich des Kolbens angeordnet. Der Schneidpresskolben 32 verfügt über zwei Hauptflächen 32a und zwei Seitenflächen 32b, welche den Körper des Schneidpresskolbens 32 umschließen. Zur sicheren Führung des Schneidpresskolbens 32 weist diese zwei Führungselemente 32c auf, welche an der Oberseite des Schneidpresskolbens 32 angeordnet sind. Im dargestellten Ausführungsbeispiel sind die Führungselemente 32c als, von der Seitenfläche 32b hervorragende würfelförmige Elemente, ausgebildet.

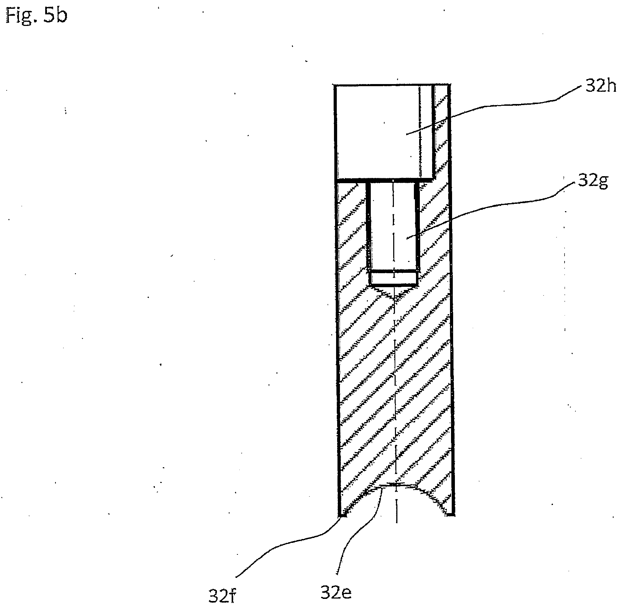

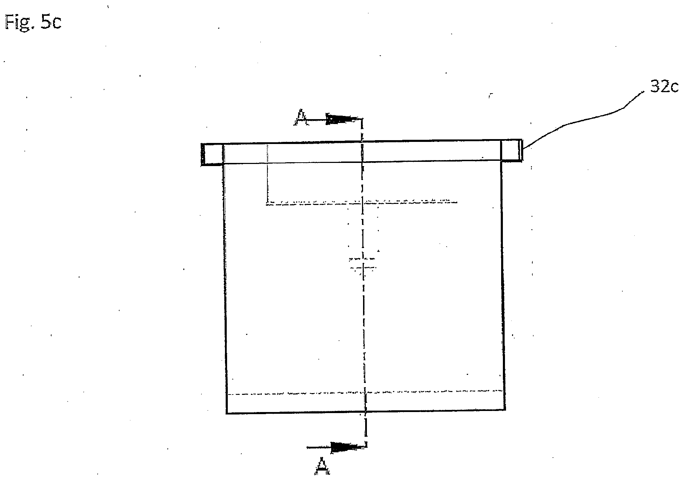

In Figur 5b ist eine Schnittansicht des Schneidpresskolbens 32 dargestellt. An der Oberseite des Schneidpresskolbens 32 befindet sich der Freischnitt 32h, welcher in Verbindung mit der Befestigungsbohrung 32g zur Befestigung des Schneidpresskolbens am jeweiligen Aktuator des Kolbens dienen. An der Unterseite bzw. Arbeitsseite 32d des Schneidpresskolbens 32 ist eine Kante 32f (Schneide) dargestellt, welche in eine konkave Stirnfläche (bzw. gewölbte Arbeitsfläche) 32e mündet. Die konkave Stirnfläche 32e verläuft entlang der Kante 32f der Hauptfläche 32a, und somit entlang der Längsrichtung der rechteckigen Grundfläche des Schneidpresskolbens 32. Besonders vorteilhaft ist die Unterseite und zwar insbesondere die Arbeitsseite 32d des Schneidpresskolbens zusätzlich gehärtet. Die Wölbung der konkaven Stirnfläche verläuft bevorzugt entlang einer Hauptachse des Schneidpresskolbens 32, welche bevorzugt orthogonal zur Bewegungsrichtung des Schneidpresskolbens 32 ist. Die Kante 32f des Schneidpresskolbens (bzw. Schneide) verläuft im dargestellten Beispiel orthogonal zur Bewegungsrichtung des Schneidpresskolbens, welcher sich entlang der Achse, welche parallel zur Höhe des Körpers des Schneidpresskolbens 32 liegt, bewegt. In einer weiteren Ausführungsform ist die Kante 32f nicht als durchgehende Kante zwischen den Seitenflächen 32b vorgesehen, sondern weist eine oder mehrere Bereiche mit gleichen oder verschiedenen Steigungen auf und zwar derart, dass eine sägezahnartige Kontur der Kante erreicht werden kann. In einem weiteren Ausführungsbeispiel weist die in Figur 5b orthogonal zur Bewegungsrichtung entlang der Hubachse des Schneidpresskolbens 32 verlaufende Kante 32f, einen Anstellwinkel gegenüber dieser Bewegungsachse auf. Bevorzugt liegt dieser Anstellwinkel in einem Bereich von 2° bis 30° und bevorzugt 27°. Durch einen solchen Winkel ist es möglich, eine schräge Kante auszubilden, so dass der Schneidvorgang durch den Schneidpresskolben 32 weiter verbessert werden kann. Mit anderen Worten weist somit die Kante 32f in dieser besonderen Weiterbildung einen Winkel ungleich 90° gegenüber der Seitenfläche 32b (oder auch der Kolbenbewegungsrichtung) auf, wodurch die Kante 32f somit nicht mehr orthogonal auf die Seitenfläche 32b (oder auch der Kolbenbewegungsrichtung) verläuft. In Figur 5c ist nochmals eine Seitenansicht des Schneidpresskolbens 32 mit den seitlich angebrachten Führungselementen 32c dargestellt.

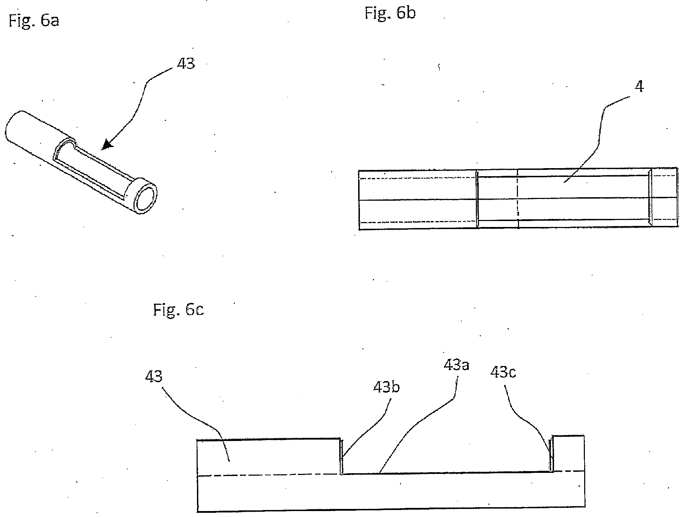

Das Pressrohr 43 ist bevorzugt beiderseitig geöffnet ausgeführt und weist in der Mantelfläche einen Freischnitt auf, wie in Figur 6a dargestellt. Bevorzugt verläuft der Freischnitt des Pressrohrs 43 vom äußeren Umfang in radialer Richtung bis zur Längsachse des Pressrohrs 43. In axialer Richtung verläuft der Freischnitt zwischen den Endbereichen des Pressrohrs 43, ohne jedoch ein Ende des Rohrs zu erreichen. Die Hauptpresskammer 4, wie in Figur 6b dargestellt, wird vom Innenraum des Pressraums 43 gebildet.

Der Pressrohrfreischnitt gemäß Figur 6c wird von einer ersten Seitenfläche 43b und einer zweiten Seitenfläche 43c in axialer Richtung begrenzt, wobei in radialer Richtung eine untere Begrenzung 43a des Pressrohrfreischnitts vorliegt. Die untere Begrenzung 43a des Pressrohrfreischnitts ist bevorzugt entlang der Mittellinie bzw. entlang der Längsachse des Pressrohrs 43 ausgebildet. Im freigeschnittenen Abschnitt des Pressrohrs 43 wird somit durch den Pressrohrfreischnitt das Pressrohr bis zur Hälfte in radialer Richtung freigeschnitten, so dass der verbleibende Teil des Pressrohrs 43 im Bereich des Pressrohrfreischnitts einen Halbkreis bildet. Zum Verschließen der Hauptpresskammer 4 wird der Pressrohrfreischnitt mit dem Schneidpresskolben verschlossen. Bevorzugt weist der Schneidpresskolben somit als konkave Stirnfläche 32e eine Stirnfläche mit einer Wölbung auf, welche einem Halbkreis mit dem Radius r des inneren Kreises der Grundfläche des Pressrohrs 43 entspricht. Bei Zusammenfügen des Schneidpresskolbens mit dem Pressrohr 43 wird somit ein durchgehender Innenraum, welcher zylinderförmig mit einer kreisförmigen Grundfläche und dem Radius r ist, gebildet. Zur Verbesserung des Ineinandergreifens des Pressrohrs 43 mit dem Schneidpresskolben weist das Pressrohr 43 an der ersten Seitenfläche 43b und an der zweiten Seitenfläche 43c eine Fase auf, welche den Eingriff des Schneidpresskolbens erleichtert.

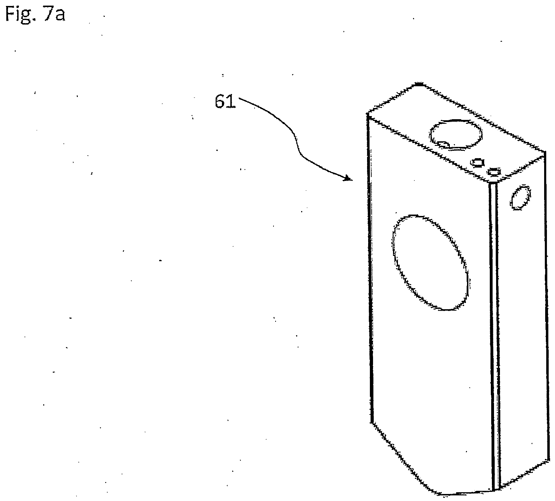

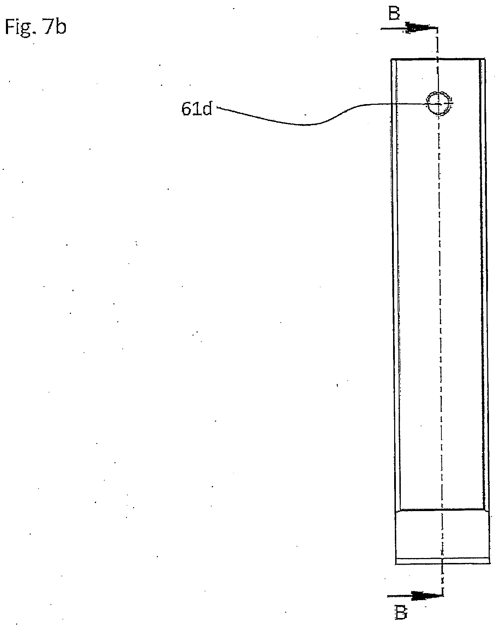

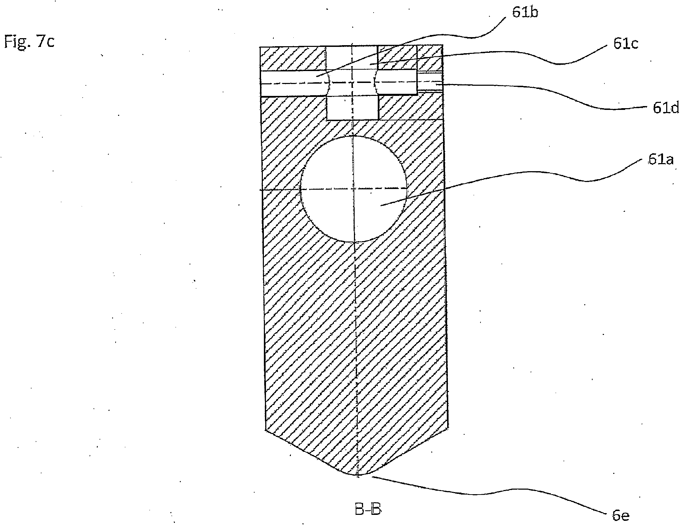

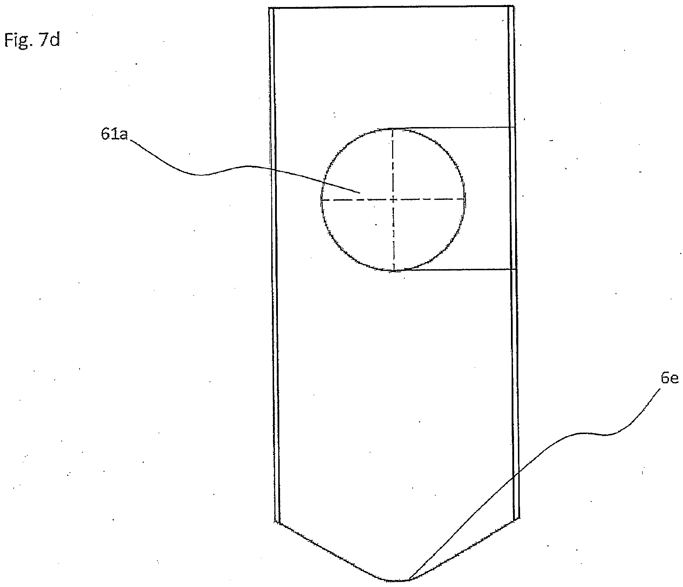

Der Verschlussschieber 61 ist in Figur 7a dargestellt. Dieser weist eine spitzförmig zulaufende Stirnseite 6e auf, welche im Endbereich eine Rundung aufweist. Über die Durchlassöffnung 61a des Verschlussschiebers 61 wird das fertige Brikett in die Auswurfeinrichtung 6 weiterbefördert. Die Hauptfläche des Verschlussschiebers 61 dient als Gegenstück zum Hauptpresskolben 42 beim Pressvorgang. Somit wird das Pressgut vom Hauptpresskolben 42 gegen die Hauptfläche des Verschlussschiebers 61 gepresst. Zum Anschluss des Verschlussschiebers an die Öffnungshydraulik 61a weist der Verschlussschieber 61 eine Durchgangsöffnung 61b, eine Eingriffsöffnung 61c und ein Befestigungsgewinde 61d auf. Über die Eingriffsöffnung 61c wird das direkte Anschlussstück an den Presskörper der Öffnungshydraulik 61a befestigt, und zwar durch Einsatz eines Stiftes in die Durchgangsöffnung 61b, welcher bevorzugt über ein Befestigungsgewinde 61d verschraubt wird. Diese Öffnungen sind auch in Figur 7c dargestellt, wobei auch in Figur 7b das Befestigungsgewinde 61d dargestellt ist. In Figur 7d ist die Durchlassöffnung 61a dargestellt und die Stirnseite 6e des Verschlussschiebers 61.

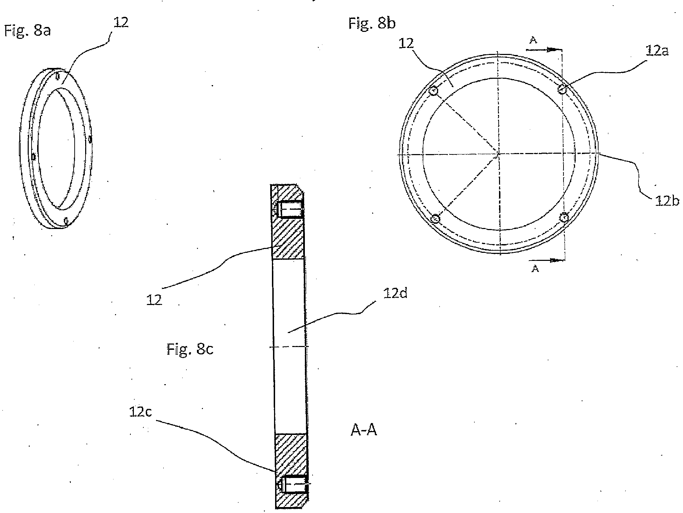

Zur Verbesserung des Schneidevorgangs kann ein Schneidering als Schneideplatte vorgesehen sein. Ein solcher Schneidering 12 ist in Figur 8a, 8b, 8c dargestellt. Bevorzugt weist der Schneidring 12 vier regelmäßig um den Umfang verteilte Befestigungsbohrungen 12a auf, über welche der Schneidering 12 sicher und einfach fixiert wird. Zum leichteren Einbau des Schneiderings weist dieser an der Außenseite eine Phase 12b auf. Der Schneidering weist zudem eine Zufuhröffnung 12d auf, durch welche das Pressgut hindurch befördert wird. Das zu schneidende Pressgut wird entlang der am Umfang verlaufenden Schneide 12c durch Zusammenwirken des Schneiderings mit dem Schneidpresskolben 32 gleichmäßig geschnitten. Ein weiterer Vorteil der Schneidplatte (bzw. Schneidering) ist es, dass dieser austauschbar, also leicht abnehmbar ausgeführt ist. Durch Austausch der Schneidplatte lässt sich somit die Güte des Schnitts einstellen. Der Schneidspalt zwischen Schneidplatte und Schneidpresskolben kann durch Austausch der Schneidplatte variiert werden. Insbesondere kann die Schneidplatte durch eine dickere oder dünnere Schneidplatte (bzw. Schneidring) ausgetauscht werden, so dass die Schneidevorrichtung dem Pressgut angepasst werden kann. Die Dicke der Schneidplatte bezieht sich dabei auf die axiale Ausdehnung, in Richtung Schneidpresskolben. Das schnelle Austauschen wird insbesondere auch durch die Verschraubung der Schneidplatte erreicht, so dass durch Lösen dieser Verschraubung ein Austausch der Schneidplatte ermöglicht wird.

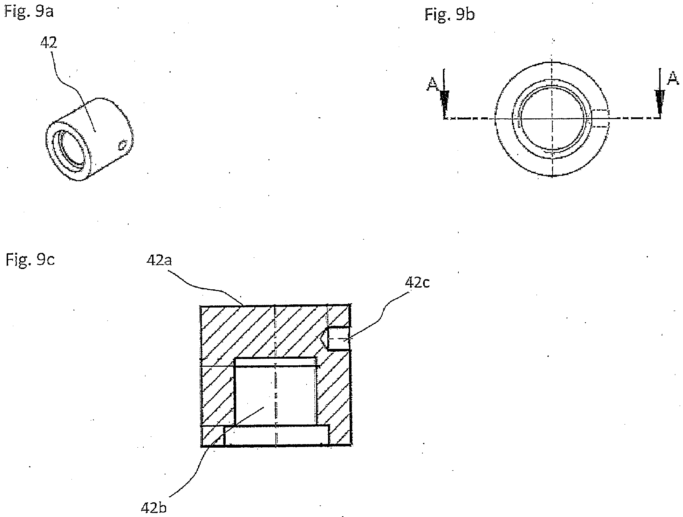

Der Hauptpresskolben 42, welcher über ein Verbindungselement 40 mit dem Hauptpressstempel 41 verbunden ist, wird in Figur 9a dargestellt. Dieser weist einen Verbindungsabschnitt auf, welcher über eine Befestigungsaufnahme 42b verfügt. Diese Befestigungsaufnahme 42b wird über das Verbindungselement 40 des Hauptpresskolbens 42 mit dem Hauptpressstempel 41 mechanisch verbunden. Die Befestigungsaufnahme 42b dient besonders der Übertragung von Zugkräften, während die Druckkräfte des Hauptpresskolbens 42 über die planen Anschlussflächen an der Unterseite des Hauptpresskolbens 42, welche direkt an den Hauptpressstempel 41 grenzen, übertragen werden. An der Oberseite oder an der Stirnfläche des Hauptpresskolbens 42 ist die Eingriffsfläche 42a des Hauptpresskolbens. Diese Eingriffsfläche 42a wirkt direkt auf das Pressgut in der Hauptpresskammer 4 um dieses zu verdichten. Zur Optimierung des Pressvorgangs ist die Eingriffsfläche 42a an der Stirnseite des Hauptpresskolbens 42 bombiert ausgestaltet. Figur 9c zeigt eine Schnittansicht A-A durch den Hauptpresskolben 42. Der Verlauf des Schnitts A-A ist in Figur 9b dargestellt. Abhängig vom jeweiligen Pressgut kann die Eingriffsfläche 42a konvex oder konkav oder auch kegelförmig ausgestaltet sein. Zudem weist der Hauptpresskolben 42 eine Seitenöffnung 42c auf.

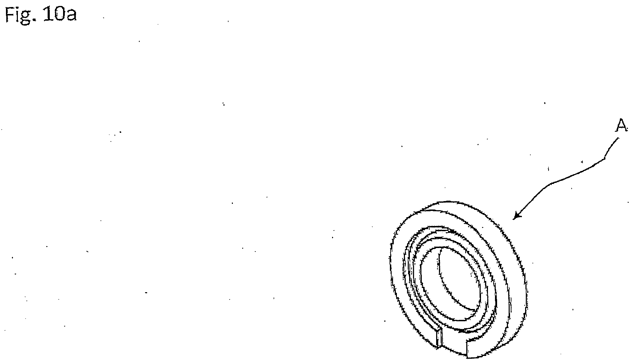

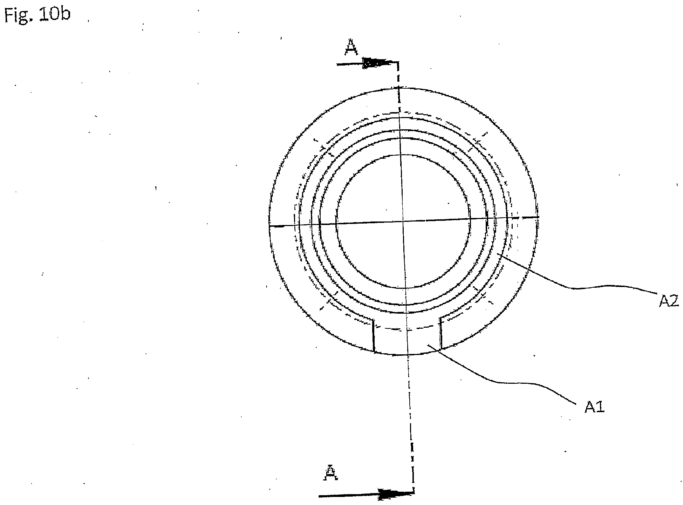

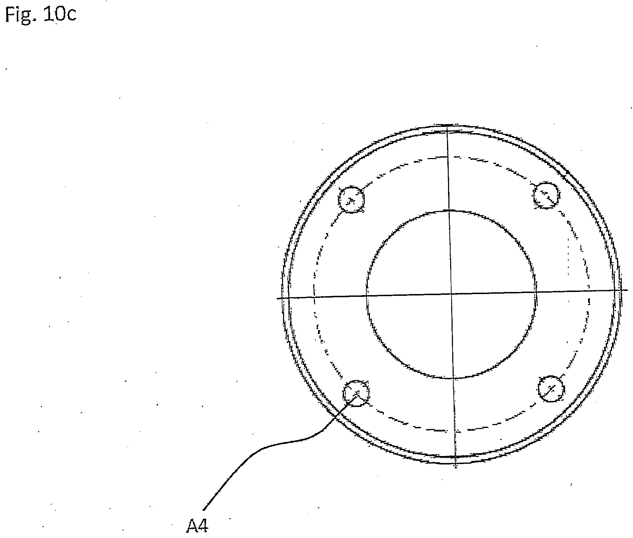

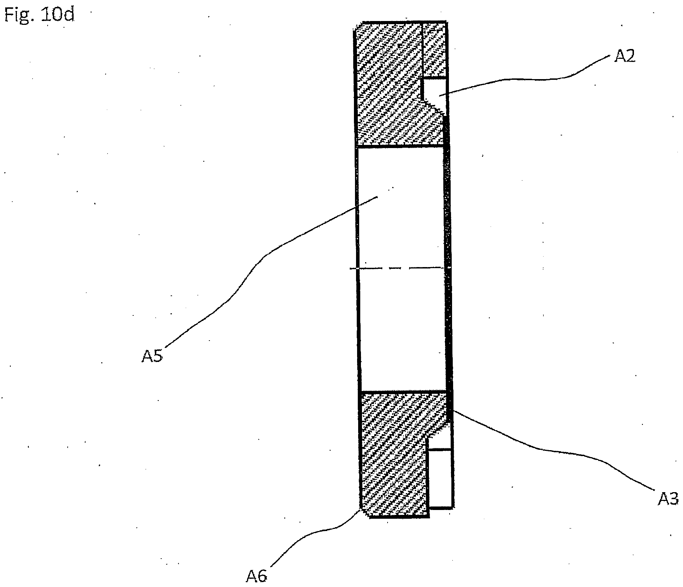

Für den Abtransport der ausgepressten Flüssigkeit kann in einem Ausführungsbeispiel eine Zwischenplatte A, welche in Figur 10a dargestellt ist, vorgesehen sein. Alternativ dazu oder zusätzlich kann die ausgepresste Flüssigkeit auch direkt über eine Öffnung im Hauptpressrohr 43 abgeführt werden. Die Zwischenplatte A weist eine Abscheideöffnung A1 und eine ringförmige Aufnahmeöffnung A2 auf. Über die ringförmig verlaufende Aufnahmeöffnung A2 wird entlang des gesamten Umfangs im Endbereich des Pressrohrs 43 angrenzend zum Verschlussschieber 61 die ausgepresste Flüssigkeit gleichmäßig aufgenommen und über die Abscheideöffnung A1 abgeführt. Zur Gewährleistung der Abfuhr der ausgepressten Flüssigkeit weist die Zwischenplatte A zwischen einer Durchlassöffnung A5, weiche direkt an das Pressrohr 43 grenzt und einen Teil der Hauptpresskammer bildet, einen Spalt A3 auf, welche die ringförmige AufnahmeöffnungA2 direkt mit der Durchlassöffnung A5 und somit mit der Hauptpresskammer 4 verbindet. Die ausgepresste Flüssigkeit fließt somit aus der Hauptpresskammer über den Spalt A3 in die ringförmige Aufnahmeöffnung A2 und weiter in die Abscheideöffnung A1 um schließlich in der Wanne 5 zu landen. Der Spalt A3 ist ringförmig ausgebildet. Der Spalt A3 weist bevorzugt eine Spaltbreite von 0,1 mm bis 3 mm und weiter bevorzugt von 0,5 mm auf. Zum verbesserten Einpassen der Zwischenplatte A in das zentrale Aufnahmeteil Z weist die Zwischenplatte A eine Fase A6 auf. In Figur 10c sind die Befestigungsbohrungen A4 dargestellt, über welche die Zwischenplatte A befestigt wird. Bevorzugt sind dies vier gleichmäßig am Umfang verteilte Bohrungen.

Der Schneidpresskolben 32 ist bevorzugt aus Metall und weiter bevorzugt aus einer Metalllegierung, welche zumindest einen der Stoffe Chrom, Vanadium oder Molybdän enthält, hergestellt.

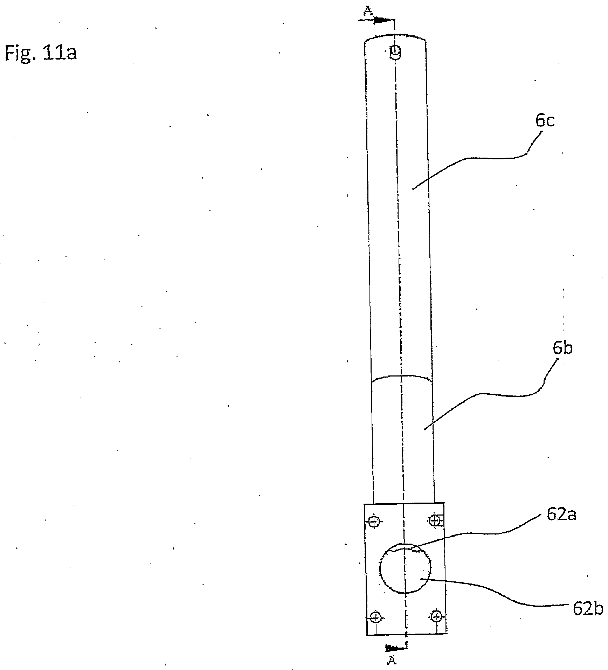

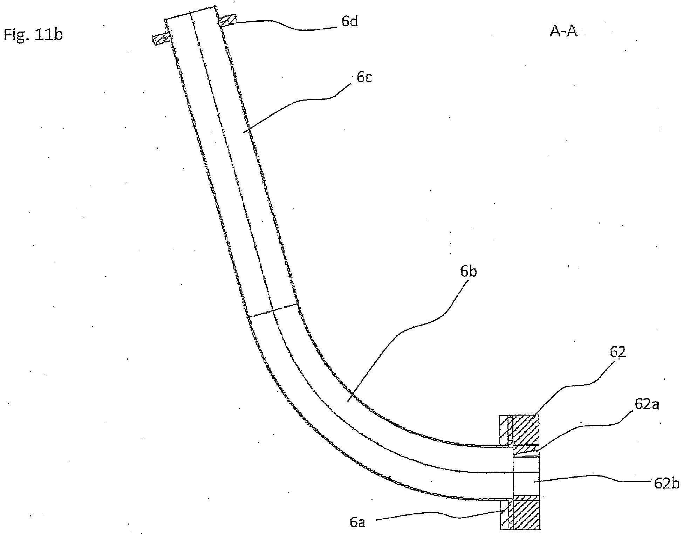

In Figur 11a und 11b ist die Auswurfeinrichtung 6 dargestellt. Die fertigen Presslinge werden durch eine Auswurfplatte 62, welche eine Durchlassöffnung 62b aufweist, hindurchgefördert. Die Durchlassöffnung weist dabei ein Eingriffteil 62a auf, welches die Durchlassöffnung 62b in Auswurfrichtung verjüngt. Somit kann auf den Pressling nochmals während des Auswurfvorgangs eingewirkt werden und somit kann dieser nochmals zusammengepresst werden. Über eine Befestigungsscheibe 6a ist das Bogenstück 6b mit der Auswurfplatte 62 verbunden. Angrenzend an das Bogenstück 6b findet sich das Tangentenstück 6c des Auswurfs, welches im Endbereich ein Kragenstück 6d aufweist.

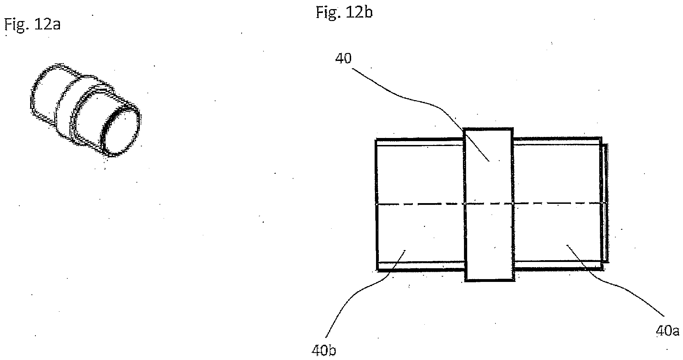

Zur Verdeutlichung der Verbindung des Hauptpresskolbens 42 mit dem Hauptpressstempel 41 über das Verbindungselement 40 ist dieses nochmal in Figur 12a dargestellt. Das Verbindungselement 40 weist dabei einen ersten und einen zweiten Gewindeabschnitt 40a, 40b auf, welcher in den Hauptpresskolben 42 bzw. den Hauptpresstempel 41 verschraubt wird. Der Hauptpresskolben 42 wird somit über das Verbindungselement (Gewindestift) 40 mit dem Hauptpressstempel 41 verschraubt.

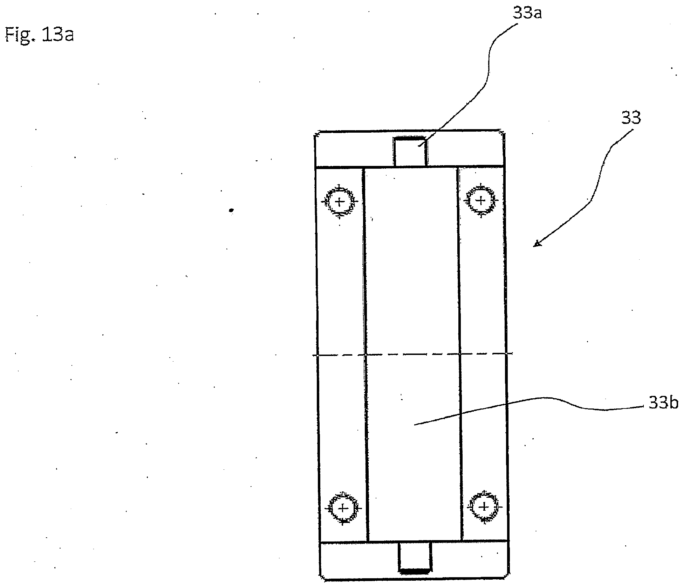

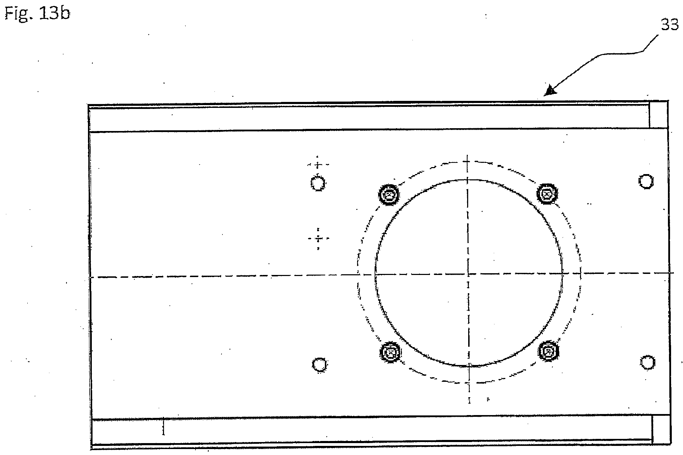

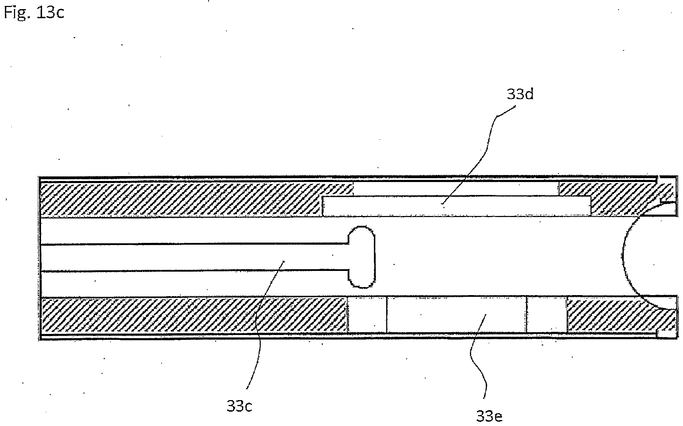

In das zentrale Aufnahmeteil Z wird eine Führung für den Schneidpresskolben 32 eingefügt, welche bevorzugt gehärtete Innenflächen aufweist und welche für das Gleiten des Schneidpresskolbens 32 optimiert ist. Figuren 13a bis 13c zeigen die Kolbenführung 33. Die Kolbenführung 33 weist Führungsflächen auf, welche insbesondere Hauptführungsflächen 33b umfassen. Die Grundfläche des Innenraums der Kolbenführung 33 ist an die Grundfläche des Schneidpresskolbens 32 derart angepasst, dass einerseits eine Bewegung des Schneidpresskolbens in der Führung ermöglicht wird und andererseits das Spiel zwischen dem Schneidpresskolben und den inneren Führungsflächen möglichst gering gehalten wird um ein Verklemmen von Pressgut, welches sich zwischen die Führungsflächen begeben würde, zu verhindern. Der Schneidpresskolben 32 wird im Innenbereich der Kolbenführung 33 beiderseitig zusätzlich über seitliche Führungsnuten 33c, in welche die Führungselemente 32c eingreifen, geführt und in der Bewegung begrenzt. Die Kolbenführung 33 weist zudem eine Öffnung 33e, welche in Richtung des Inspektionsdeckels verläuft, auf und eine Öffnung zur Aufnahme des Schneidrings, einer Schneidringaufnahme 33d.

## Patentansprüche

1. Vorrichtung zur Herstellung von Presslingen aus Pressgut mit
einer Beschickungseinrichtung (2) zur Aufnahme von Pressgut, die im Bereich einer Zufuhrschnecke (1) angeordnet ist,
einer durch die Zufuhrschnecke (1) beschickbaren Vorpresskammer (31),
einer verschließbaren Hauptpresskammer (4) mit einem zur Verdichtung des Inhalts der Hauptpresskammer verfahrbaren Hauptpressstempel (41), und
einer Auswurfeinrichtung (6) für Presslinge, **gekennzeichnet durch**
eine Schneidvorrichtung (3) zum Schneiden des Pressguts während oder nach Eintritt in die Vorpresskammer (31), wobei die Vorrichtung dazu eingerichtet ist, das über die Zufuhrschnecke (1) der Vorpresskammer (31) zugeführte Pressgut mittels der Schneidvorrichtung (3) zuzuschneiden, so dass geschnittenes Pressgut in der Vorpresskammer (31) und/oder Hauptpresskammer (4) **durch** den Hauptpressstempel verdichtet wird.

2. Vorrichtung nach Anspruch 1, **dadurch gekennzeichnet, dass** die Vorpresskammer (31) über einen Zufuhrabschnitt von der Zufuhrschnecke (1) beschickbar ist, und die Schneidvorrichtung im Bereich des Zufuhrabschnitts angeordnet ist.

3. Vorrichtung nach Anspruch 1 oder 2, **dadurch gekennzeichnet, dass** die Schneidvorrichtung (3) einen Schneidpresskolben (32) umfasst, der im Endbereich einen Schneidabschnitt und einen Pressabschnitt aufweist, so dass ein gemeinsames Schneiden und Pressen von Pressgut, durch die Bewegung des Schneidpresskolbens (32) im Bereich der Vorpresskammer (31) bewirkbar ist.

4. Vorrichtung nach Anspruch 3, **dadurch gekennzeichnet, dass** die Hauptpresskammer (4) vom Schneidpresskolben (32) verschließbar ist.

5. Vorrichtung nach einem der Ansprüche 3 oder 4, **dadurch gekennzeichnet, dass** der Schneidpresskolben (32) im Schneidabschnitt eine Schneide zum Schneiden von Pressgut aufweist, wobei
der Schneidpresskolben (32) eine Stirnfläche mit einer konkaven Krümmung aufweist.

6. Vorrichtung nach zumindest einem der Ansprüche 3 bis 5, **dadurch gekennzeichnet, dass** die Hauptpresskammer (4) zylinderförmig ausgebildet ist und ein konkaver Teil der Stirnfläche des Schneidpresskolbens (32) zum Verschließen der Hauptpresskammer (4) einen Teil der zylindrischen Mantelfläche der Hauptpresskammer (4) bildet und
die zylinderförmige Mantelfläche der Hauptpresskammer (4) eine kreisförmige oder elliptische Grundfläche aufweist.

7. Vorrichtung nach einem der Ansprüche 3 bis 6, **dadurch gekennzeichnet, dass** die Hauptpresskammer (4) als Hohlraum eines Rohrs (43) ausgebildet ist.

8. Vorrichtung nach einem der Ansprüche 1 bis 7, **dadurch gekennzeichnet, dass** die Vorrichtung
- im Bereich der Hauptpresskammer (4) eine Zwischenplatte (A) aufweist die eine Abscheideöffnung (A1) zum Abscheiden von Flüssigkeit aus der Hauptpresskammer (4) aufweist und
- eine Wanne (5) zur Aufnahme der Flüssigkeit umfasst.

9. Vorrichtung nach Anspruch 8, **dadurch gekennzeichnet, dass** die Abscheideöffnung (A1) als ringförmiger Spalt ausgebildet ist, welcher an die Hauptpresskammer (4) und bevorzugt auch an die Auswurfeinrichtung (6) grenzt.

10. Vorrichtung nach einem der Ansprüche 1 bis 7, **dadurch gekennzeichnet, dass** die Hauptpresskammer (4) eine Abscheideöffnung (A1) zum Abscheiden der aus dem Pressgut ausgepressten Flüssigkeit aufweist.

11. Vorrichtung nach einem der vorhergehenden Ansprüche, **dadurch gekennzeichnet, dass** im Zufuhrabschnitt eine Schneideplatte (12) mit einer Schneidekante angeordnet ist, wobei die Schneideplatte (12) insbesondere als Schneidering ausgebildet ist, wobei
der Schneidpresskolben (32) translatorisch bewegbar angeordnet ist, sodass durch die Bewegung des Schneidpresskolbens (32) mit der Schneide relativ zur Schneideplatte (12) ein Schneiden von Pressgut erreichbar ist.

12. Vorrichtung nach einem der vorhergehenden Ansprüche, **dadurch gekennzeichnet, dass** die Auswurfeinrichtung (6) einen Verschlussschieber (61) und ein Zwischenstück (62) mit einer Öffnung aufweist und die Öffnung derart angeordnet ist, dass gepresstes Pressgut durch die Öffnung hindurch bewegbar ist, wobei die Öffnung trichterförmig ausgestaltet ist.

13. Vorrichtung nach einem der vorhergehenden Ansprüche, **dadurch gekennzeichnet, dass** der Hauptpressstempel (41) einen Hauptpresskolben (42) aufweist, der eine bombierte Stirnfläche aufweist.

14. Vorrichtung nach einem der vorhergehenden Ansprüche, **dadurch gekennzeichnet, dass** die Wanne (5), zur Ableitung von Flüssigkeit in einen Behälter (51), einen trichterförmig geneigten Boden aufweist.

15. Werkzeugmaschine mit einer Vorrichtung nach einem der vorhergehenden Ansprüche, **dadurch gekennzeichnet, dass** die aus dem Pressgut ausgepresste Flüssigkeit über die Vorrichtung zur Werkzeugmaschine rückgeführt wird.
